Europäisches Patentamt

(19) European Patent Office

Office européen des brevets

(11) Veröffentlichungsnummer: **0 180 825**
**B1**

(12) **EUROPÄISCHE PATENTSCHRIFT**

(45) Veröffentlichungstag der Patentschrift: **10.10.90**

(51) Int. Cl.⁵: **H 02 B 1/28**

(21) Anmeldenummer: **85113111.0**

(22) Anmeldetag: **16.10.85**

(54) Schaltschrank mit Schrankkorpus and Schranktür.

(30) Priorität: **09.11.84 DE 3440899**

(43) Veröffentlichungstag der Anmeldung:
**14.05.86 Patentblatt 86/20**

(45) Bekanntmachung des Hinweises auf die
Patenterteilung:
**10.10.90 Patentblatt 90/41**

(84) Benannte Vertragsstaaten:
**AT BE CH FR GB IT LI LU NL SE**

(56) Entgegenhaltungen:
**EP-A-0 010 763**
**DE-C- 750 828**
**DE-U-1 910 585**
**DE-U-8 126 178**

(73) Patentinhaber: **Rittal-Werk Rudolf Loh GmbH &
Co. KG
Auf dem Stützelberg
D-6348 Herborn (DE)**

(72) Erfinder: **Stedron, Horst
Eichenstrasse 31
D-6348 Herborn 3 (DE)**
Erfinder: **Lehr, Lothar
Dresselndorfer Strasse 16
D-5909 Burbach (DE)**

(74) Vertreter: **Vogel, Georg
Hermann-Essig-Strasse 35 Postfach 105
D-7141 Schwieberdingen (DE)**

EP 0 180 825 B1

**Beschreibung**

Die Erfindung betrifft einen Schaltschrank mit einem boxartigen Schrankkorpus und mit einer die Öffnung desselben verschließenden Schranktür, bei dem in die Öffnung des Schrankkorpus eine Türzarge eingesetzt ist, die mit der Innenwandung des Schrankkorpus verbunden ist und sich bei geschlossener Schranktür mit einem Dichtungssteg an einem auf der Innenseite der Schranktür angebrachten Dichtungselement abstützt, und bei dem die Schranktür umlaufend einen zur Innenseite der Schranktür hin senkrecht abgewinkelten Rand aufweist. (Siehe DE—U— 8 126 178 und DE—U— 1 910 585).

Bei bekannten Schaltschränken dieser Art ist insbesondere bei der Aufstellung im Freien keine eindeutige Abdichtung, gerade im Bereich zwischen der Schranktür und dem Schrankkorpus, vorhanden. Dieser Übergang zwischen der Schranktür und dem Schrankkorpus ist insbesondere an der oberen horizontalen Seite des Schaltschrankes kritisch, da hier sich z.B. Regenwasser sammeln kann, das beim Öffnen der Schranktür in den Schaltschrank gelangen kann.

Es ist Aufgabe der Erfindung, bei einem Schaltschrank der eingangs erwähnten Art die Abdichtung zwischen der Schranktür und dem Schrankkorpus auf einfache Weise so zu verbessern, daß der Schaltschrank auch im Freien aufgestellt werden kann, ohne befürchten zu müssen, daß Regenwasser in den Schaltschrank eindringen kann.

Diese Aufgabe wird nach der Erfindung dadurch gelöst, daß zumindest an der oberen horizontalen Seite der Öffnung der Rand der Schranktür so weit gegenüber der zugekehrten Außenseite des Schrankkorpus zurückgesetzt ist, daß die Türzarge mit einem Schenkel und dem Schrankkorpus eine nach vorne offene, zugängliche Aufnahme bildet, daß in die nutförmige Aufnahme eine Abdeckleiste eingesteckt ist, die zusammen mit der Türzarge mit dem Schrankkorpus verbunden ist und daß die Abdeckleiste über die geschlossene Schranktür vorsteht und auf der der Schranktür zugekehrten Seite mit einer Dichtlippe versehen ist, die sich auf der Außenseite des zugekehrten Randes der geschlossenen Schranktür abstützt.

Die Abdeckleiste überdeckt den Übergang zwischen dem Schrankkorpus und der Schranktür, so daß sicher kein Regenwasser eindringen kann, wobei die Dichtlippe einen eindeutigen Abschluß dieses Überganges bringt. In vielen Fällen ist es ausreichend, eine derartige Abdeckleiste nur an der oberen horizontalen Seite des Schrankkorpus anzubringen. Die vertikalen Seiten und die untere horizontale Seite des Schrankkorpus sind jedoch in gleicher Weise mit einer derartigen Abdeckleiste zu versehen, um alle Übergänge zwischen Schranktür und Schrankkorpus eindeutig abzudecken. Wird die geöffnete Schranktür geschlossen, dann streift die Dichtlippe die auf dem zugekehrten Rand der Schranktür angesammelte bzw. anhaftende Flüssigkeit ab, so daß keine Flüssigkeit in den von der Abdeckleiste überdeckten Übergang zwischen Schranktür und Schrankkorpus gelangen kann.

Zur Verbindung der Abdeckleiste mit dem Schrankkorpus ist nach einer Ausgestaltung vorgesehen, daß die Abdeckleiste und die Türzarge mit der Innenwandung des Schrankkorpus verklebt sind, wobei Klebstoffmasse die Aufnahme ausfüllt und in die Klebstoffmasse ein Ansatz der Abdeckleiste eingebettet ist. Diese Verbindung eignet sich besonders für eine Ausgestaltung, die dadurch gekennzeichnet ist, daß der Schrankkorpus, die Türzarge und die Schranktür als Kunststoff-Teile ausgebildet und hergestellt sind.

Damit sich zwischen dem Schrankkorpus und der Abdeckleiste keine Flüssigkeit ansammeln kann, sieht eine weitere Ausgestaltung vor, daß die der Schranktür abgekehrte Seite der Abdeckleiste bündig an die zugekehrte Außenseite des Schrankkorpus anschließt.

Ist nach einer Ausgestaltung vorgesehen, daß die Abdeckleiste auf beiden Seiten Absätze aufweist, die durch Anschlag an die Stirnseite des Schrankkorpus und die Stirnseite des die Aufnahme begrenzenden Schenkels der Türzarge die Einsteckbewegung der Abdeckleiste in die Aufnahme begrenzen, dann verbleibt in der Aufnahme genügend Raum für Klebstoffmasse, um den Absatz der Abdeckleiste voll in dieselbe einzubetten und die Türzarge ausreichend fest mit dem Schrankkorpus zu verbinden. Dazu ist weiterhin vorgesehen, daß das der Schranktür abgekehrte Ende des die Aufnahme begrenzenden Schenkels der Türzarge in einen senkrecht dazu stehenden Steg übergeht, der die Breite der Aufnahme am Nutgrund festlegt.

Nach einer konstruktiv einfachen Ausgestaltung ist vorgesehen, daß die Dichtlippe einstückig an der Abdeckleiste angeformt ist.

Wird für die Abdeckleiste ein starres Material gewünscht, dann sieht eine weitere Ausgestaltung vor, daß die Dichtlippe als getrenntes Teil mit einem Steg in eine Nut der Abdeckleiste eingesetzt und daran gehalten ist. Die als getrenntes Teil hergestellte Dichtlippe kann dann aus einem Material mit einer genügenden Elastizität hergestellt werden.

Eine Verbesserung in der Ableitung von Regenwasser ergibt sich nach weiteren Ausgestaltungen dadurch, daß am freien Ende der Abdeckleiste auf der der Schranktür zugekehrten Seite eine durchgehende Tropfnase angeformt ist, und daß die Außenseiten des Schrankkorpus in einem Winkel zu der Öffnung des Schrankkorpus stehen, der etwas kleiner ist als 90°.

Für die Ausgestaltung der Türzarge ist vorgesehen, daß der Dichtungssteg der Türzarge über einen rechtwinklig dazu stehenden Verbindungssteg mit dem die Aufnahme begrenzenden Schenkel verbunden ist und daß das Dichtungselement an der Innenseite der Schranktür zwischen zwei senkrecht an der Innenseite der Schranktür abstehenden Haltestegen gehalten ist, um eine genügend große Aufnahme für die Abdeckleiste zu bekommen und den Dichtungssteg in größerem Abstand von der Innenwandung des Schrankkorpus anordnen zu können.

Damit der Abstand zwischen dem Schrankkorpus und der geschlossenen Schranktür klein gehalten werden kann, sieht eine Ausgestaltung vor, daß der dem Rand zugekehrte Haltesteg kürzer ist als der dem Rand abgekehrte Haltesteg.

Die Erfindung wird anhand von in den Zeichnungen dargestellten Ausführungsbeispielen näher erläutert. Es zeigt.

Fig. 1 einen Teilschnitt durch die obere horizontale Seite eines bekannten Schaltschrankes im Bereich des Überganges von Schranktür und Schrankkorpus bei geschlossener Schranktür,

Fig. 2 einen der Fig. 1 entsprechenden Teilschnitt mit einer mit dem Schrankkorpus verbundenen Abdeckleiste mit angeformter Dichtlippe und

Fig. 3 einen der Fig. 2 entsprechenden Teilschnitt, wobei in die Abdeckleiste eine als getrenntes Teil ausgebildete Dichtlippe eingesetzt ist.

Von dem Schrankkorpus 20, der als boxartiges Kunststoffteil ausgebildet sein kann, ist lediglich ein Teil der oberen Seitenwand zu sehen, deren Außenseite mit 21 bezeichnet ist. In die nach vorne offene Öffnung des Schrankkorpus 20 wird die Türzarge 22 eingesetzt und eingeklebt, wie die in die Aufnahme 26 eingebrachte Klebstoffmasse 27 zeigt. Die Aufnahme 26 wird durch den Schenkel 23 der Türzarge 22 und die Innenwandung des Schrankkorpus 20 begrenzt, wobei der rechtwinklig am Schenkel 23 abstehende Steg 24 die Breite der nutförmigen Aufnahme 26 am Nutgrund bestimmt. Der Verbindungssteg 25 der Türzarge 22 führt zu dem Dichtungssteg 26, der im Abstand zur Innenwandung des Schrankkorpus 20 steht und aus der Öffnung des Schrankkorpus 20 ragt. Die Schranktür 10 hat einen umlaufenden Rand 11, der etwa senkrecht zur Innenseite der Schranktür 10 steht. Außerdem sind an der Innenseite der Schranktür 10 die beiden unterschiedlich langen Haltestege 12 und 13 angeformt, zwischen denen das Dichtungselement 14 gehalten ist, an dem sich bei geschlossener Schranktür 10 der Dichtungssteg 39 der Türzarge 22 abstützt. Die Türzarge 22 kann als einstückiges Rahmenteil hergestellt oder aus vier Profilabschnitten zusammengesetzt sein.

Es ist einleuchtend, daß bei der Aufstellung dieses bekannten Schaltschrankes im Freien Regenwasser, Schnee und dgl. zwischen den Schrankkorpus 20 und die geschlossene Schranktür 10 eindringen kann, die sich auf dem Dichtungssteg 26 ansammeln kann.

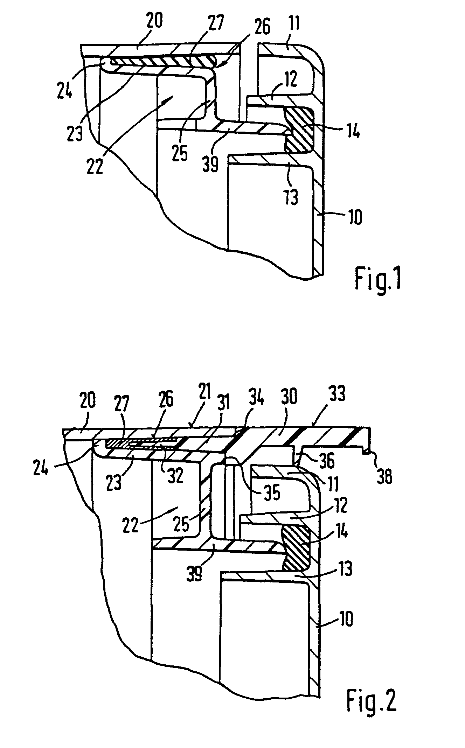

Um dies zu vermeiden, sieht die Erfindung eine Abdeckleiste 30 vor. Wie Fig. 2 zeigt, wird dabei der Rand 11 der Schranktür 10 an den Seiten, an denen der Schrankkorpus 20 eine Abdeckleiste 30 trägt, so weit zurückgesetzt, daß die Aufnahme 26 von vorne her zugänglich bleibt. Indie Aufnahme 26 wird der Ansatz 31 der Abdeckleiste 30 eingesteckt, der in einen kleineren Teil 32 übergeht. Dieser Teil 32 ist mit in die Klebstoffmasse 27 eingebettet, so daß die Abdeckleiste 30 zusammen mit der Türzarge 22 mit der Innenwandung des Schrankkorpus 20 verbunden wird. Die Absätze 34 und 35 der Abdeckleiste 30 begrenzen die Einsteckbewegung des Ansatzes 31 in die Aufnahme 26, da sie an den Stirnseiten des Schrankkorpus 20 und des Schenkels 23 der Türzarge 22 anstoßen. Der Dichtungssteg 39 übernimmt in gleicher Weise wie beim bekannten Schaltschrank die Abdichtung zum Dichtungselement 14. Die Abdeckleiste 30 überragt die geschlossene Schranktür 10 und stützt sich mit der Dichtlippe 36 an der Außenseite des zugekehrten Randes 11 der Schranktür 10 ab. Die Dichtlippe 36 ist beim Ausführungsbeispiel nach Fig. 2 an der der Schranktür 10 zugekehrten Seite der Abdeckleiste 30 angeformt. Die Außenseite 33 der Abdeckleiste 30 schließt bündig an die Außenseite 21 des Schrankkorpus 20 an, die leicht nach hinten geneigt sein kann, so daß sie zur Öffnung des Schrankkorpus 20 in einem Winkel steht, der etwas kleiner als 90° ist. Das freie Ende der Abdeckleiste 30 trägt auf der der Schranktür 10 zugekehrten Seite eine durchgehende Tropfnase 38, die die Ableitung der Flüssigkeit von der Abdeckleiste 30 verbessert.

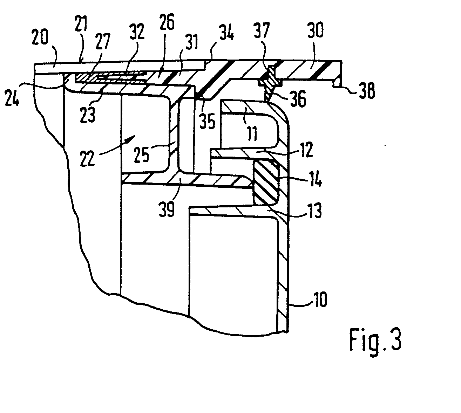

Bei dem Ausführungsbeispiel nach Fig. 3 ist die Dichtlippe 36 als getrenntes Teil ausgebildet, das mit einem Steg in eine Nut 37 der Abdeckleiste eingesteckt und darin gehalten ist. Die Funktion der Dichtlippe 36 bleibt gleich, sie kann jedoch aus einem anderen, elastischeren Material wie für die Abdeckleiste 30 gefertigt werden.

Beim Schließen der geöffneten Schranktür 10 streift die Dichtlippe 36 den zugekehrten Rand 11 der Schranktür 10 ab, so daß sich darauf auch bei geschlossener Schranktür 10 keine Flüssigkeit mehr halten kann.

Da die Türzarge 22 an der Öffnung des Schrankkorpus 22 umlaufend angebracht ist, kann z.B. nur die obere horizontale Seite des Schaltschrankes mit einer Abdeckleiste 30 versehen werden oder es lassen sich auch drei oder alle vier Seiten des Schaltschrankes mit Abdeckleisten abdecken, die dann zu einem Teil- bzw. Vollrahmen ergänzt und zusammengefaßt sein können.

**Patentansprüche**

1. Schaltschrank mit einem boxartigen Schrankkorpus (20) und mit einer die Öffnung desselben verschließenden Schranktür (10), bei dem in die Öffnung des Schrankkorpus (20) eine Türzarge (22) eingesetzt ist, die mit der Innenwandung des Schrankkorpus (20) verbunden ist und sich bei geschlossener Schranktür (10) mit einem Dichtungssteg (39) an einem auf der Innenseite der Schranktür (10) angebrachten Dichtungselement (14) abstützt, und bei dem die Schranktür (10) umlaufend einen zur Innenseite der Schranktür (10) hin senkrecht abgewinkelten Rand (11) aufweist, dadurch gekennzeichnet, daß zumindest an der oberen horizontalen Seite der Öffnung der Rand (11) der Schranktür (10) so weit gegenüber der zugekehrten Außenseite (21) des Schrankkorpus (20) zurückgesetzt ist, daß die Türzarge (22) mit einem Schenkel (23) und dem Schrankkorpus (20) eine nach vorne offene, zugängliche Aufnahme (26) bildet, daß in die nutförmige Aufnahme (26) eine Abdeckleiste (30) eingesteckt ist, die zusammen mit der Türzarge (22) mit dem Schrankkorpus (20) verbunden ist, und daß die Abdeckleiste (30) über die geschlossene Schranktür (10) vorsteht und auf der der Schranktür (10) zugekehrten Seite mit einer Dichtlippe (36) versehen ist, die sich auf der Außenseite des zugekehrten Randes (11) der geschlossenen Schranktür (10) abstützt.

2. Schaltschrank nach Anspruch 1, dadurch gekennzeichnet, daß die Abdeckleiste (30) und die Türzarge (22) mit der Innenwandung des Schrankkorpus (20) verklebt sind, wobei Klebstoffmasse (27) die Aufnahme (26) ausfüllt und in die Klebstoffmasse (27) ein Ansatz (32) der Abdeckleiste (30) eingebettet ist.

3. Schaltschrank nach Ansprüche oder 2, dadurch gekennzeichnet, daß die der Schranktür (10) abgekehrte Seite (33) der Abdeckleiste (30) bündig an die zugekehrte Außenseite (21) des Schrankkorpus (20) anschließt.

4. Schaltschrank nach einem der Ansprüche 1 bis 3, dadurch gekennzeichnet, daß die Abdeckleiste (30) auf beiden Seiten Absätze (34, 35) aufweist, die durch Anschlag an die Stirnseite des Schrankkorpus (20) und die Stirnseite des die Aufnahme (26) begrenzenden Schenkels (23) der Türzarge (22) die Einsteckbewegung der Abdeckleiste (30) in die Aufnahme (26) begrenzen.

5. Schaltschrank nach einem der Ansprüche 1 bis 4, dadurch gekennzeichnet, daß die Dichtlippe (36) einstückig an der Abdeckleiste (30) angeformt ist.

6. Schaltschrank nach einem der Ansprüche 1 bis 5, dadurch gekennzeichnet, daß die Dichtlippe (36) als getrenntes Teil mit einem Steg in eine Nut (37) der Abdeckleiste (30) eingesetzt und daran gehalten ist.

7. Schaltschrank nach einem der Ansprüche 1 bis 6, dadurch gekennzeichnet, daß am freien Ende der Abdeckleiste (30) auf der der Schranktür (10) zugekehrten Seite eine durchgehende Tropfnase (38) angeformt ist.

8. Schaltschrank nach einem der Ansprüche 1 bis 7, dadurch gekennzeichnet, daß der Dichtungssteg (39) der Türzarge (22) über einen rechtwinklig dazu stehenden Verbindungssteg (25) mit dem die Aufnahme (26) begrenzenden Schenkel (23) verbunden ist und daß das Dichtungselement (14) an der Innenseite der Schranktür (10) zwischen zwei senkrecht an der Innenseite der Schranktür (10) abstehenden Haltestegen (12, 13) gehalten ist.

9. Schaltschrank nach Anspruch 8, dadurch gekennzeichnet, daß der dem Rand (11) zugekehrte Haltesteg (12) kürzer ist als der dem Rand (11) abgekehrte Haltesteg (13).

10. Schaltschrank nach einem der Ansprüche 1 bis 9, dadurch gekennzeichnet, daß das der Schranktür (10) abgekehrte Ende des die Aufnahme (26) begrenzenden Schenkels (23) der Türzarge (22) in einen senkrecht dazu stehenden Steg (24) übergeht, der die Breite der Aufnahme (26) am Nutgrund festlegt.

11. Schaltschrank nach einem der Ansprüche 1 bis 10, dadurch gekennzeichnet, daß die Außenseiten (21) des Schrankkorpus (20) in einem Winkel zu der Öffnung des Schrankkorpus stehen, der etwas kleiner ist als 90°.

12. Schaltschrank nach einem der Ansprüche 1 bis 11, dadurch gekennzeichnet, daß der Schrankkorpus (20), die Türzarge (22) und die Schranktür (10) als Kunststoff-Teile ausgebildet und hergestellt sind.

13. Schaltschrank nach einem der Ansprüche 1 bis 12, dadurch gekennzeichnet, daß die Abdeckleisten (30) benachbarter Seiten des Schrankkorpus (20) zu einem Teil- bzw. Vollrahmen zusammengefaßt sind.

**Revendications**

1. Armoire de commutation comprenant un corps (20) d'armoire en forme de boîte et une porte (10) fermant l'ouverture de celle-ci, sur laquelle est monté dans l'ouverture du corps (20) d'armoire un châssis (22) de porte qui est relié à la paroi intérieure du corps (20) d'armoire et qui s'appuie, lorsque la porte (10) est fermée, par une traverse (39) d'etanchéité sur un élément (14) d'étanchéité fixé sur la face intérieure de la porte (10) et sur laquelle la porte (10) présente sur son pourtour un bord (11) coudé à angle droit avec la face intérieure de ladite porte (10), armoire caractérisée en ce que, au moins sur la face horizontale supérieure de l'ouverture, le bord (11) de la porte (10) est suffisamment reculé par rapport à la face extérieure (21) en regard du corps (20) d'armoire, pour que le châssis (22) de porte constitue avec un montant (23) et le corps (20) d'armoire, un logement (26) ouvert vers l'avant et accessible, de manière telle qu'une bordure (30) de recouvrement, enfoncée dans le logement (26) en forme de rainure, est reliée à la fois au châssis (22) de porte et au corps (20) d'armoire, et en ce que la bordure (30) de recouvrement avance sur la porte (10) d'armoire fermée et est pourvue, sur la face en regard de la porte (10), d'une lèvre (36) d'étanchéité, qui s'appuie sur la face extérieure du bord (11) en regard de la porte (10) fermée.

2. Armoire de commutation selon la revendication 1, caractérisée en ce que la bordure (30) de recouvrement et le châssis (22) de porte sont collés avec la paroi intérieure du corps (20) d'armoire, une masse de colle (27) remplissant le logement (26), tandis qu'un appendice (32) de la bordure (30) de recouvrement est inséré dans la masse de colle (27).

3. Armoire de commutation selon la revendication 1 ou 2, caractérisée en ce que la face (33) de la bordure (30) de recouvrement, opposée à la porte (10), se raccorde à ras de la face extérieure (21) du corps (20) d'armoire située en regard.

4. Armoire de commutation selon l'une des revendications 1 à 3, caractérisée en ce que la bordure (30) de recouvrement présente, sur les deux côtés, des embouts (34, 35) qui, au moyen d'une butée sur la face frontale du corps (20) d'armoire et de la face frontale du montant (23) du châssis (22) de porte délimitant le logement (26), limitent le mouvement d'enfoncement de la bordure (30) dans le logement (26).

5. Armoire de commutation selon l'une des revendications 1 à 4, caractérisée en ce que la lèvre (36) d'étanchéité est formée d'un seul tenant avec la bordure (30) de recouvrement.

6. Armoire de commande selon l'une des revendications 1 à 5, caractérisée en ce que la lèvre (36) d'étanchéité est constituée par une pièce séparée avec une barrette engagée dans une rainure (37) de la bordure (30), dans laquelle elle est maintenue.

7. Armoire de commutation selon l'une des revendications 1 à 6, caractérisée en ce qu'un rejeteau (38) continu est constitué à l'extrémité libre de la bordure (30) de recouvrement, sur la face située en regard de la porte (10).

8. Armoire de commutation selon l'une des revendications 1 à 7, caractérisée en ce que la traverse (39) d'étanchéité du châssis (22) de porte est reliée au montant (23), délimitant le logement (26), par une traverse (25) de raccordement formant avec elle un angle droit, et en ce que l'élément (14) d'étanchéité est maintenu sur la face intérieure de la porte (10) entre deux traverses (12, 13) de retenue s'écartant à angle droit de la face intérieure de la porte (10).

9. Armoire de commutation selon la revendication 8, caractérisée en ce que la traverse (12) de retenue en regard du bord (11) est plus courte que la traverse (13) de retenue opposée audit bord (11).

10. Armoire de commutation selon l'une des revendications 1 à 9, caractérisée en ce que l'extrémité, opposée à la porte (10), du montant (23) du châssis (22) de porte délimitant le logement (26) se termine par une barrette (24) formant avec elle un angle droit, qui détermine la largeur du logement (26) au fond de la rainure.

11. Armoire de commutation selon l'une des revendications 1 à 10, caractérisée en ce que les faces extérieures (21) du corps (20) d'armoire forment avec l'ouverture du corps d'armoire un angle un peu inférieur à 90°.

12. Armoire de commutation selon l'une des revendications 1 à 11, caractérisée en ce que le corps (20) d'armoire, le châssis (22) de porte et la porte (10) de l'armoire sont constitués et réalisés avec des pièces en matière plastique.

13. Armoire de commutation selon l'une des revendications 1 à 12, caractérisée en ce que les bordures (30) de recouvrement de faces voisines du corps (20) d'armoire sont réunies en un cadre partiel ou complet.

## Claims

1. Switchgear cubicle with a box-like cubicle body (20) and with a cubicle door (10) closing the opening of the latter; with this switchgear cubicle, a door frame (22) is inserted into the opening of the cubicle body (20), which is connected with the inner wall of the cubicle body (20) and, when the cubicle door (10) is closed, rests with a sealing bar (39) upon a sealing element (14) which is fixed at the inner side of the cubicle door (10), and its cubicle door (10) has a circular edge (11) which is vertically angular-shaped towards the inner side of the cubicle door (10), characterized by the fact that, at least at the upper horizontal side of the opening, tke edge (11) of the cubicle door (10) is set back so far as against the turned-to outside (21) of the cubicle body (20), that the door frame (22), together with one leg (23) and the cubicle body (20), forms an accessible receptacle (26) which is open at the front, that a cover strip (30) is inserted into the slot-like receptacle (26), which is connected with the cubicle body together with the door frame (22), and that the cover strip (30) overhangs the closed cubicle door (10) and is furnished, on the side which is turned to the cubicle door (10), with a packing washer (36) which leans upon the outside of the turned-to edge (11) of the closed cubicle door (10).

2. Switchgear cubicle according to claim 1, characterized by the fact that the cover strip (30) and the door frame (22) are glued to the inside wall of the cubicle body (20), adhesive material (27) filling up the receptacle (26) and an adjoint piece (32) of the cover strip (30) being embedded into the adhesive material (27).

3. Switchgear cubicle according to claim 1 or 2, characterized by the fact that the side (33) of the cover strip (30) which turns away from the cubicle door (10) is made flush with the turned-to outside (21) of the cubicle body (20).

4. Switchgear cubicle according to one of the claims 1 to 3, characterized by the fact that the cover strip (30) has, on both sides, recesses (34, 35) which, by touching the front side of the cubicle body (20) and the front side of the leg (23) of the door frame (22) bounding the receptacle (26), limit the inserting movement of the cover strip (30) into the receptacle (26).

5. Switchgear cubicle according to one of the claims 1 to 4, characterized by the fact that the packing washer (36) and the cover strip (30) are formed in one piece.

6. Switchgear cubicle according to one of the claims 1 to 5, characterized by the fact that the packing washer (36) is, as a separate part, inserted with a bar into a slot (37) of the cover strip (30) and is held there.

7. Switchgear cubicle according to one of the claims 1 to 6, characterized by the fact that on the side which faces the cubicle door (10), the free end of the cover strip (30) ends in a continuous dripping edge (38).

8. Switchgear cubicle according to one of the claims 1 to 7, characterized by the fact that the sealing bar (39) of the door frame (22) is connected with the leg (23) bounding the receptacle (26) via a connecting bar (25) standing at a right angle to it and that the sealing element (14) on the inner side of the cubicle door (10) is held between two supporting bars (12, 13) which stick out vertically on the inner side of the cubicle door (10).

9. Switchgear cubicle according to claim 8, characterized by the fact that the supporting bar (12) which is turned towards the edge (11) is shorter than the supporting bar (13) turning away from the edge (11).

10. Switchgear cubicle according to one of the claims 1 to 9, characterized by the fact that the end of the leg (23) of the door frame (22) bounding the receptacle (26), which turns away from the cubicle door (10), turns into a bar (24) standing vertically to it, which determines the width of the receptacle (26) at the bottom of the slot.

11. Switchgear cubicle according to one of the claims 1 to 10, characterized by the fact that the outer sides (21) of the cubicle body (20) stand in an angle, which is a little smaller than ''' 90°, to the opening of the cubicle body.

12. Switchgear cubicle according to one of the claims 1 to 11, characterized by the fact that the cubicle body (20), the door frame (22) and the cubicle door (10) are formed and manufactured as plastic parts.

13. Switchgear cubicle according to one of the claims 1 to 12, characterized by the fact that the cover strips (30) of adjoining sides of the cubicle body (20) are combined to a partial frame respectively to a solid frame.

Fig.1

Fig.2

1

Fig.3